# EUROPÄISCHE PATENTANMELDUNG

(11) **EP 1 504 840 A1**
(43) Veröffentlichungstag der Anmeldung: **09.02.2005**
(21) Anmeldenummer: 03102358.3
(22) Anmeldetag: 30.07.2003
(51) Int. Cl.: B23K 1/005, B23K 1/00, B23K 1/14, B23K 1/20, B23K 33/00, B23K 26/24, B62D 25/00, B62D 27/02, B62D 33/02, F16B 5/08

(54) **Lötverbindung mit mehreren überlappenden Blechen**

(71) Anmelder: Ford Global Technologies, LLC, A subsidary of Ford Motor Company, Dearborn, MI 48126 (US)
(72) Erfinder: Stadtler, Arnold, 50935, Koeln (DE); Hover, Juergen Wilhelm, 53797, Lohmar (DE); Müller, Guido, 50767, Köln (DE)
(74) Vertreter: Drömer, Hans-Carsten, Dr.-Ing.

(57) **Zusammenfassung**

Die Erfindung betrifft eine Lötverbindung mit mehreren Blechen, bei der ein oberes Deckblech (3) flach auf einem unteren Bodenblech (2) aufliegt, und das Deckblech (3) einen Rand aufweist, entlang dem die beiden Bleche mittels einer Lötnaht (6) verbunden sind. Sie ist dadurch gekennzeichnet, daß im Bereich des Randes zwischen Deckblech (3) und Bodenblech (2) ein Lötspalt (6) angeordnet ist, der zumindest teilweise mit Lötmaterial (5) aufgefüllt ist.

Vorteil der Erfindung ist eine genau definierte Lötverbindung mit besser reproduzierbaren und höheren Festigkeitswerten als aus dem Stand der Technik bekannt. Während des Lötvorganges fließt das Lötmaterial in den Lötspalt (6) ein und füllt den Lötspalt (6) im wesentlichen vollständig aus, wodurch eine von der flächenmäßigen Ausdehnung her gesehen genau definierte Lötverbindung zwischen Deck- (3) und Bodenblech (2) im gesamten Bereich des Lötspaltes (6) entsteht.

## Beschreibung

Die Erfindung betrifft eine Lötverbindung von mehreren Blechen gemäß dem Oberbegriff des Anspruches 1.

Aus der WO 98/21000 ist eine Lötverbindung von mehreren Blechen bekannt, bei der ein oberes Deckblech flach auf einem unteren Bodenblech aufliegt, und das Deckblech einen Rand aufweist, entlang dem die beiden Bleche mittels einer Lötnaht verbunden sind. Zwischen dem Rand des Deckbleches und dem Bodenblech bildet sich beim Löten eine Kehlnaht aus, die der kräftemäßigen Verbindung der beiden Bleche dient. Vor allem bei hochbelasteten Lötverbindungen, oder wenn Beschlag- oder Verstärkungsbleche mittels dieser Lötverbindung auf ein Bodenblech gelötet werden, ist diese Kehlnaht nicht geeignet, alle Kräfte zwischen den Blechen zu übertragen, z. B. Zugkräfte senkrecht zur Blechebene im Bereich der Lötverbindung. Besser geeignet wäre hier eine direkte Verbindung der beiden Bleche über eine Lötnaht.

Diese direkte Verbindung der beiden Bleche entsteht, wenn ein Teil des Lötmittels in den Spalt zwischen den Blechen fließt. Dies ist jedoch zufällig und hängt davon ab, wie an der jeweiligen Randstelle die Pressung zwischen den Blechen ist, ob die Bleche evt. gewellt oder anderweitig verformt sind und ob zwischen den Blechen sich unerwünschte Verunreinigungen befinden. Die so entstandene direkte Verbindung der Bleche über Lötmittel im Spalt zwischen den Blechen ist somit nicht kontinuierlich und reproduzierbar herstellbar. Deshalb kann aus konstruktiver Sicht diese Spaltverbindung bei der Festigkeitsauslegung der Lötverbindung nicht berücksichtigt werden.

Aufgabe der Erfindung ist es, eine Lötverbindung so zu gestalten, daß diese zuverlässig eine hohe Festigkeit aufweist.

Gelöst wird diese Aufgabe mit den Merkmalen des Anspruches 1.

Indem im Bereich des Randes zwischen Deckblech und Bodenblech ein Lötspalt angeordnet ist, der zumindest teilweise mit Lötmaterial aufgefüllt ist, entsteht eine genau definierte Lötverbindung mit besser reproduzierbaren und höheren Festigkeitswerten als aus dem Stand der Technik bekannt. Während des Lötvorganges fließt das Lötmaterial in den Lötspalt ein und füllt den Lötspalt im wesentlichen vollständig aus, wodurch eine von der flächenmäßigen Ausdehnung her gesehen genau definierte Lötverbindung zwischen Deck- und Bodenblech im gesamten Bereich des Lötspaltes entsteht.

Der Lötspalt ist definiert durch eine Spaltweite und eine Spaltbreite. Die Spaltweite ergibt sich aus dem Abstand der gegenüberliegenden Flächen von Deckblech und Bodenblech. Die Spaltbreite ergibt sich durch die Entfernung, in der eine zwischen Deckblech und Bodenblech angeordneten Begrenzungskante vom Rand entfernt angeordnet ist. Die Begrenzungskante kann auf verschiedene Weise erzeugt werden, bevorzugte Ausführungen werden in den folgenden Ausgestaltungen der Erfindung beschrieben.

Vorteilhaft weist dabei der Lötspalt am Rand eine Spaltweite auf, die größer ist als das dünnere Blech und die kleiner ist als das dickere Blech der beiden zu verbindenden Bleche Deckblech und Bodenblech. Legt man die Dicken üblicher Bleche zugrunde, für die diese Art von Lötverbindung geeignet ist, kann die Spaltweite des Lötspaltes am Rand eine Spaltweite zwischen 0,2 mm und 5 mm betragen, wobei als bevorzugte Spaltweite ein Wert zwischen 0,5 mm bis 2 mm anzusehen ist. Ist die Spaltweite des Lötspaltes zu gering, ergeben sich die aus dem Stand der Technik bekannten Nachteile der unkontrollierten Lötmittelflusses. Ist die Spaltweite zu groß, ist zum einen der Lötmaterialverbrauch zu groß, und der Lötspalt kann u.U. nicht vollständig mit Lötmaterial ausgefüllt werden, da das Lötmaterial, je nach Lage der Lötstelle, wegfließt. Diese Maße sind als Anhaltswerte zu verstehen. Bei Bedarf kann die Spaltweite des Lötspaltes auch davon abweichen, insbesondere zu größeren Spaltweiten als 5 mm hin.

Vorteilhaft weist der Lötspalt eine Spaltbreite, gemessen vom Rand des Deckbleches, zwischen 0,5 mm und 5 mm auf. Die Spaltbreite ergibt sich im wesentlichen durch die Anwendung der im folgenden beschriebenen Maßnahmen und ist dadurch gekennzeichnet, daß die Spaltweite des Lötspaltes abnimmt auf eine Spaltdicke, die sich durch den direkten Kontakt der Bleche bzw. weiterer Elemente ergibt. Durch die vorgegebenen Spaltbreite entsteht am Rand des Deckbleches ein direkte Lötverbindung von der Spaltbreite des Lötspaltes zwischen Deckblech und Bodenblech. Unbenommen ist natürlich ein größerer Lötmittelauftrag, so daß sich zusätzlich eine Kehlnaht der bekannten Art ausbildet, was zu einer weiteren Festigkeitssteigerung führt.

Vorteilhaft ist der Lötspalt gebildet, indem zumindest ein Mittelblech zwischen Deckblech und Bodenblech angeordnet ist, wobei der Rand des Mittelblechs gegenüber dem Rand des Deckbleches zurückgesetzt ist. Wenn drei oder mehr Bleche verlötet werden, wird das mittlere Blech bzw. die mittleren Bleche etwas gegenüber dem Rand des Deckbleches zurückgeschnitten. Dadurch entsteht der Lötspalt ohne zusätzliche konstruktive Maßnahmen. Die Spaltweite des Lötspaltes entspricht in etwa der Dicke des mittleren Bleches bzw. der Summe der Dicken der mittleren Bleche.

Bei einer weiteren vorteilhaften Ausgestaltung der Erfindung wird der Lötspalt gebildet, indem ein Distanzstück zwischen Deckblech und Bodenblech angeordnet ist, wobei der Rand des Distanzstückes gegenüber dem Rand des Deckbleches zurückgesetzt ist. Der Lötspalt wird hier erzeugt, indem z.B. eine Blechscheibe zwischen Deckblech und Bodenblech geklemmt wird. Indem der Rand der Blechscheibe gegenüber dem Rand des Deckbleches versetzt ist, entsteht der Lötspalt wie bereits oben beschrieben ohne weitere Maßnahmen. Die Spaltweite des Lötspaltes entspricht dann der Dicke des Distanzstückes.

Vorteilhaft besteht das Distanzstück aus einem Draht, der längs des Randes angeordnet ist. Dieser Draht wird so gebogen, daß er entlang des zu lötenden Randes mit einem bestimmten Abstand verläuft. Vor der Lötung der zwischen den beiden Blechen in der vorgesehen Position fixiert und bildet damit den Lötspalt zwischen den Blechen. Hier ist die Spaltweite des Lötspaltes durch den Drahtdurchmesser bestimmt.

In einer anderen Ausführung wird der Lötspalt gebildet, indem Deckblech und/oder Bodenblech zumindest eine Eindrückung im Bereich des Randes aufweisen. Diese Eindrückung kann als Ausprägung in eines der Bleche eingepreßt sein oder als Absatz in einem der Bleche ausgeführt sein. Damit entsteht der Lötspalt bereits durch die Anordnung der beiden Bleche aufeinander, da die Eindrückung den Rand des Deckbleches auf einen definierten Abstand hält, der durch die Tiefe der Eindrückung bestimmt wird.

Bevorzugt weist die Eindrückung die Form einer Sicke auf. Diese Sicke ist in eines der Bleche eingeprägt, und zwar mit einer Tiefe wie oben beschrieben zur Einstellung der Spaltweite des Lötspaltes und mit einer Entfernung vom Rand, wodurch die Spaltbreite des Lötspaltes vorgegeben ist. Beim Aufeinanderlegen der beiden Bleche halten die Sicken die Bleche auf Abstand und bilden die innere Begrenzung des Lötspaltes. Bevorzugt sind die Sicken deshalb parallel zum Rand angeordnet. Allerdings können die Sicken beliebige Formen aufweisen, insbesondere können auch mehrerer Sicken entlang des Randes angeordnet sein. Wichtig dabei ist, daß zumindest abschnittsweise der definierte Lötspalt aus Spaltweite und Spaltbreite entsteht.

In einer weiteren Ausführung sind Sicken in Deckblech und Bodenblech derart angeordnet, daß sie sowohl der Postionierung der Bleche selbst dienen als auch den Lötspalt erzeugen. Die Sicken sind dazu zueinander passend in beide Bleche eingeprägt, wobei eine Sicke eine geringere Tiefe als die andere aufweist. Diese Sicken können die Positionierung der Bleche aufeinander bestimmen und gleichzeitig durch ihre Gestaltung den Lötspalt bilden.

In einer weiteren Ausführung ist die Eindrückung als Absatz ausgeführt. D. h., die beiden Bleche liegen eben aufeinander, nur am Rand des Deckbleches ist der Lötspalt durch den Absatz gebildet. Dies kann z. B entlang eines Längsrandes in Form eines Falzes oder einer Konturkante in eines der Bleche eingefalzt oder eingepreßt sein. Bei dicken Blechen kann der Absatz durch mechanische Bearbeitung erzeugt werden, indem Material in Form des Lötspaltes entlang des Randes abgetragen wird.

Bevorzugt bewirkt eine Eindrückung eine konstante Spaltweite des Lötspaltes zwischen Deckblech und Bodenblech, d. h. das im Lötspalt sich befindende Lötmaterial weist über die Spaltbreite des Lötspaltes eine konstante Dicke auf. Damit ist über die gesamte Spaltbreite des Lötspaltes eine kontinuierliche Kraftübertragung gewährleistet.

Bei einer weiteren bevorzugten Ausführung bewirkt eine Eindrückung eine zum Rand des Deckbleches zunehmende Spaltweite des Lötspaltes, d. h. das im Lötspalt befindliche Lötmaterial weist am Rand des Deckbleches eine größere Dicke auf als am dem Rand gegenüberliegenden Ende des Lötspaltes. Eine solche Anordnung kann sinnvoll sein, wenn das Lötmaterial sehr gleichmäßig in den Lötspalt fließen muß.

In einer Ausführung ist der Rand des Deckbleches der Rand eines Ausschnittes im Deckblech sein, wobei der Ausschnitt vorwiegend ins Deckblech eingebracht ist, um die Verlötung mit dem Bodenblech durchzuführen. Dabei kann der Ausschnitt als Loch im Deckblech oder als Ausnehmung an der Berandung des Deckbleches ausgeführt sein. Durch die Beschränkung der Lötverbindung auf den Bereich des Ausschnittes ist die Abmessung, d. h. die Ausdehnung der Lötverbindung genau festgelegt. Wenn der Ausschnitt ein Loch im Deckblech ist, wird bei der Lötung einfach das Loch mit Lötmaterial gefüllt. Durch den Lötspalt, der das Loch umfaßt, wird dann die genaue Ausdehnung der Lötverbindung zwischen Deckblech und Bodenblech festgelegt.

Die erfinderische Idee ist auch gültig, wenn der Rand des Deckbleches die äußere Berandung des Deckbleches ist. Dies ist der Fall, wenn die beiden Bleche am Rand des Deckbleches verlötet werden soll. Dann kann durch eine der obigen Maßnahmen der Lötspalt so erzeugt werden, daß am Rand des Deckbleches der besagte Lötspalt entsteht. Damit können auch die Randlötungen festigkeitsmäßig vorteilhaft ausgeführt werden.

Nicht hinderlich für die erfinderische Idee ist ebenfalls, wenn das Bodenblech im Bereich des Randes des Deckbleches ebenfalls einen Rand aufweist. Dies ist z.B. der Fall, wenn beide Bleche eben aufeinanderliegen und überwiegend den gleichen Rand aufweisen, wie es z. B. bei Schweißflanschen bekannt ist. Dann wird diese Lötverbindung mittels des erfinderischen Lötspaltes eine höhere Festigkeit aufweisen.

Verwendung findet die erfinderischen Lötverbindung nach einem der vorherigen Ansprüche vor allem bei der Verbindung von Karosseriebauteilen untereinander und/oder mit Beschlagteilen im Automobilbau. Prinzipiell sind jedoch alle Lötverbindungen auf diese Weise fertigbar, bei denen Dünnbleche, vorzugsweise zwischen 0,3 mm und 5 mm mittels Lötungen verbunden werden. Neben weiteren Anwendungen im Fahrzeugbau" z.B. Lötung von Fahrwerksteilen, können dies sein Anwendungen bei Haushaltsgeräten, Heizungs- und Lüftungseinrichtungen oder im Anlagenbau.

Insbesondere kann die erfinderische Lötverbindung auch Verwendung finden bei der Verbindung rohrförmiger Bauteile, wobei ein Rohr mit geringerem Umfang in ein Rohr mit größerem Umfang gesteckt ist und der Lötspalt am Rand des Rohres mit größerem Umfang entsteht. Dabei ist der Querschnitt des Rohres beliebig, also nicht nur rund, sondern auch z. B. rechteckig wie bei Lüftungskanälen. Der Lötspalt entsteht dann abschnittsweise oder ganz umlaufend, je nach Anforderung an die Lötverbindung.

Die beschriebenen Anwendungen und Ausführungen können in sinnvoller Weise beliebig kombiniert werden. Insbesondere sind auch die Hinweise auf die Abmessungen nur als bevorzugte Ausführung zu verstehen. Je nach Anwendungsfall können auch größere oder kleinere Abmessungen des Lötspaltes und/oder der Blechdicken erforderlich sein.

Vorteilhaft kann diese Lötverbindung insbesondere beim automatisierten Laserlöten eingesetzt werden. Neben den bereits beschriebenen obigen Vorteilen ergibt sich eine höhere Verarbeitungsgeschwindigkeit, da der Laserstrahl in den Lötspalt strahlen kann und damit die zu verbindenden Bleche schneller und zuverlässiger durch den Laserstrahl auf die für die Lötung benötigte Temperatur aufgeheizt als dies ohne Lötspalt der Fall wäre.

Weitere vorteilhafte Ausgestaltungen der Erfindung sind den Zeichnungen zu entnehmen. Es zeigen:
- Fig. 1: einen Querschnitt durch eine erfinderische Lötverbindung mit Zwischenblech in einem Ausschnitt des Deckbleches;
- Fig. 2: eine Draufsicht auf die erfinderische Lötverbindung aus Fig. 1;
- Fig. 3: einen Querschnitt durch eine erfinderische Lötverbindung mit Zwischenblech in einem Ausschnitt des Deckbleches und mit doppelter Lötnaht;
- Fig. 4: eine Draufsicht auf die erfinderische Lötverbindung aus Fig. 3;
- Fig. 5: einen Querschnitt durch eine erfinderische Lötverbindung mit einem Draht als Distanzstück;
- Fig. 6: einen Querschnitt durch eine erfinderische Lötverbindung mit einem Absatz im Deckblech;
- Fig. 7: einen Querschnitt durch eine erfinderische Lötverbindung mit zwei Sicken im Bodenblech;
- Fig. 8: einen Querschnitt durch eine erfinderische Lötverbindung mit einer Eindrückung im Bodenblech;
- Fig. 9: einen Querschnitt durch eine erfinderische Lötverbindung mit einer Sicke in einem Lötflansch; und
- Fig. 10: eine Teilansicht von Karosserieteilen, die mittels der erfinderischen Lötverbindung gefügt sind.

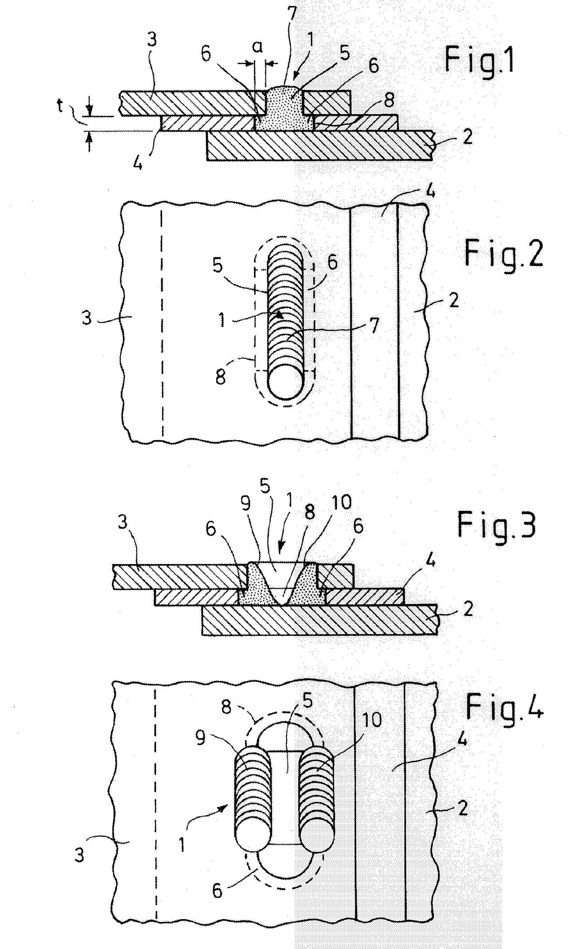

Fig. 1 und Fig. 2 zeigen eine erfinderische Lötverbindung 1, mittels derer ein Bodenblech 2, ein Deckblech 3 und ein Zwischenblech 4 in einem Ausschnitt 5 des Deckbleches 3 gefügt sind. Der Lötspalt 6 läuft um den Ausschnitt 5 herum und ist vollständig mit dem Lötmaterial der Lötnaht 7 gefüllt. Der Lötspalt 6 entsteht durch den gegenüber Ausschnitt 5 größere Ausschnitt 8 im Zwischenblech 4. Seine Spaltweite t entspricht der Dicke des Zwischenbleches 4, seine Spaltbreite a bestimmt sich aus den Differenzen der Abmessungen der Ausschnitte. Der Rand des Deckbleches 3 ist hier der Rand des Ausschnittes 5, d. h. dort wo die Lötverbindung 1 angeordnet ist.

In Fig. 3 und Fig. 4 ist eine erfinderische Lötverbindung 1 ähnlich wie bereits in Fig. 1 und 2 beschrieben. Einziger Unterschied ist, daß durch die größere Spaltbreite der Ausschnitte 5, 8 im Deckblech 3 und Zwischenblech 4 jetzt zwei Lötnähte 9 und 10 in den Ausschnitten 5, 8 eingebracht sind.

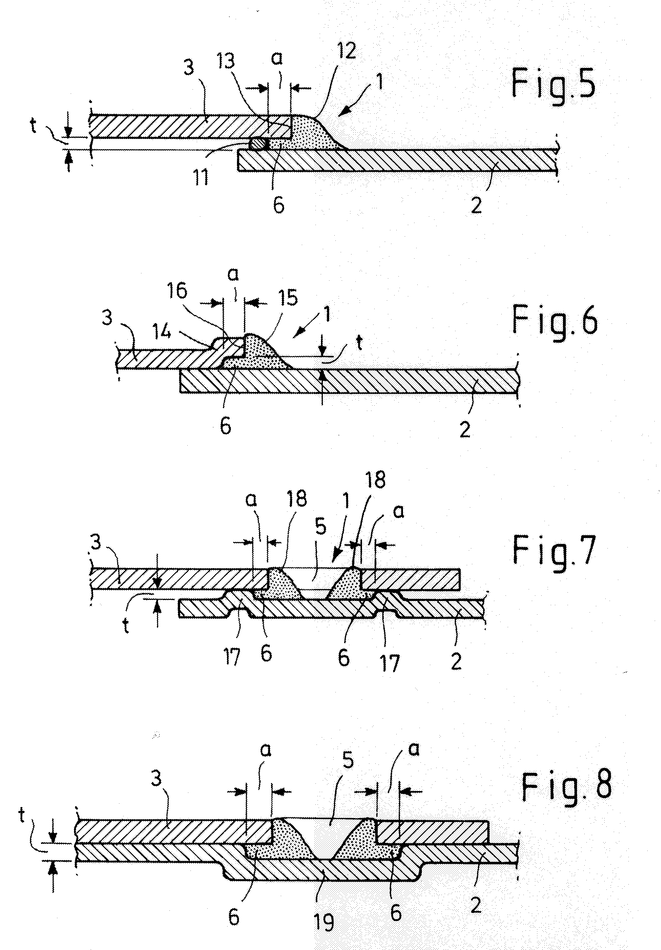

Fig. 5 zeigt eine erfinderische Lötverbindung 1, bei dem zwischen Bodenblech 2 und Deckblech 3 ein Draht 11 als Distanzstück angeordnet ist. Die Spaltweite t des Lötspaltes 6 ist bestimmt durch die Dicke des Drahtes 11, die Spaltbreite a durch die Anordnung des Drahtes 11 in einem bestimmten Abstand vom Rand 13 des Deckbleches 3.

In Fig. 6 ist eine erfinderische Lötverbindung 1 gezeigt, bei der das Deckblech 3 einen Absatz 14 aufweist, wobei der Lötspalt 6 hier bestimmt ist durch die Höhe des Absatzes, ergibt die Spaltweite t, und der Spaltbreite des Absatzes 14, ergibt die Spaltbreite a. Die Lötnaht 15 ist wieder so ausgeführt, daß der Lötspalt 6 komplett ausgefüllt ist und am Rand 16 des Deckbleches 3 eine Kehlnaht gebildet wird.

Die erfinderische Lötverbindung 1 in Fig. 7 weist Eindrückungen auf in Form zweier Sicken 17 im Bodenblech 2. Liegt das Deckblech 3 mit dem Ausschnitt 5 auf den Sicken 17 auf, bildet sich der Lötspalt 6 mit der Spaltweite t und der Spaltbreite a durch die Tiefe der Sicken 17 und ihrem Abstand vom Rand des Ausschnittes 5 des Deckbleches 3. Die doppelten Lötnähte 18 sind im Ausschnitt 5 eingebracht, ihr Lötmaterial füllt auch den Lötspalt 6 aus.

Eine weitere Variante der Idee aus Fig. 7 ist in Fig. 8 gezeigt, bei der die Lötverbindung 1 durch eine Eindrückung 19 im Bodenblech 2 erzeugt wird. Dabei weist die Eindrückung 19 eine größere Abmessung auf als der Ausschnitt 5 im Deckblech 3. Beim Aufeinanderlegen von Deckblech 3 und Bodenblech 3 ergibt sich dann der Lötspalt 6 mit der Spaltweite t und der Spaltbreite a aus der Differenz der Abmessungen von Eindrückung 19 und Ausschnitt 5. Vorteil ist hier, daß Deckblech 3 und Bodenblech 2 im wesentlichen direkt aufeinander liegen, lediglich im Bereich der Lötverbindung 1 entsteht besagter Lötspalt 6.

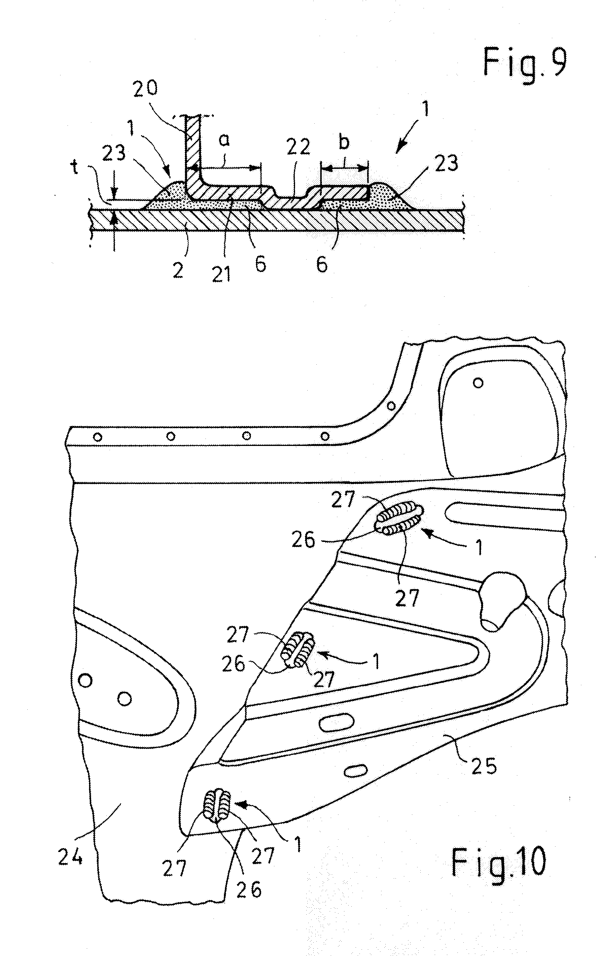

Fig. 9 zeigt eine Ausführungsform der erfinderischen Lötverbindung 1 für ein Blech 20, das mittels eines Lötflansches 21 auf ein Bodenblech 2 gelötet ist, wobei der Lötflansch 21 die Funktion des vorher beschriebenen Deckbleches übernimmt. Durch die Sicke 22 im Lötflansch 21 sind, wenn der Lötflansch 21 auf dem Bodenblech 2 aufliegt, zwei Lötspalte 6 zwischen Lötflansch 21 und Bodenblech 3 gebildet, mit der Spaltbreite a bzw. b und der Spaltweite t. Mittels zweier Lötnähte 23 wird die Verbindung zwischen Lötflansch 21 und Bodenblech hergestellt, wobei die Lötnähte 23 beidseitig des Lötflansches 21 verlaufen. Besonders vorteilhaft ist hier die großflächige direkte Verbindung zwischen Bodenblech 2 und Lötflansch 21 im Bereich der Lötspalte 6, wodurch die Lötverbindung 1 eine sehr hohe Kraftübertragung senkrecht zum Bodenblech 2 zuläßt.

In Fig. 10 ist eine Teilansicht einer Kraftfahrzeugkarosserie dargestellt, die mittels der erfinderischen Lötverbindung 1 gefügt sind. Ein Außenblech 24 einer A-Säule ist mit dem Außenblech 25 eines oberen vorderen Längsträgers mittels der Lötverbindungen 1 verbunden. Dazu weist das Außenblech 25 des Längsträgers drei Ausschnitte 26 auf, in denen jeweils doppelte Lötnähte 27 eingebracht sind.

Die erfinderischen Lötspalte, hier nicht dargestellt, sind durch Eindrückungen im Außenblech 24 der A-Säule erzeugt. Mittels der Lötverbindung 1 können somit wesentlich höhere Kräfte zwischen den beiden hoch belasteten Karosserieteilen übertragen werden.

## Patentansprüche

**1.** Lötverbindung (1) von mehreren Blechen, bei der ein oberes Deckblech (3) flach auf einem unteren Bodenblech (2) aufliegt, und das Deckblech (3) einen Rand (13, 16) aufweist, entlang dem die beiden Bleche mittels einer Lötnaht (12, 15) verbunden sind,
**dadurch gekennzeichnet, daß**
im Bereich des Randes (13, 16) zwischen Deckblech (3) und Bodenblech (2) ein Lötspalt (6) angeordnet ist, der zumindest teilweise mit Lötmaterial aufgefüllt ist.

**2.** Lötverbindung nach Anspruch 1,
**dadurch gekennzeichnet, daß**
der Lötspalt (6) gebildet wird, indem zumindest ein Mittelblech (4) zwischen Deckblech und Bodenblech (2) angeordnet ist, wobei der Rand des Mittelbleches (4) gegenüber dem Rand des Deckbleches (3) zurückgesetzt ist.

**3.** Lötverbindung nach Anspruch 1 oder 2,
**dadurch gekennzeichnet, daß**
der Lötspalt (6) gebildet wird, indem ein Distanzstück zwischen Deckblech (3) und Bodenblech (2) angeordnet ist, wobei der Rand des Distanzstückes gegenüber dem Rand (13) des Deckbleches (3) zurückgesetzt ist.

**4.** Lötverbindung nach Anspruch 3,
**dadurch gekennzeichnet, daß**
das Distanzstück (11) aus einem Draht (11) besteht, der längs des Randes (13) des Deckbleches (3) in einem gewissen Abstand angeordnet ist.

**5.** Lötverbindung nach einem der vorherigen Ansprüche,
**dadurch gekennzeichnet, daß**
der Lötspalt (6) gebildet wird, indem Deckblech (3) und/oder Bodenblech (2) zumindest eine Eindrückung (19) im Bereich des Randes aufweisen.

**5.** Lötverbindung nach Anspruch 4,
**dadurch gekennzeichnet, daß**
die Eindrückung die Form einer Sicke (17, 22) aufweist.

**6.** Lötverbindung nach Anspruch 5,
**dadurch gekennzeichnet, daß**
Sicken in Deckblech (3) und Bodenblech (2) derart angeordnet sind, daß sie sowohl der Positionierung der Bleche selbst dienen als auch den Lötspalt (6) erzeugen

**7.** Lötverbindung nach Anspruch 4,
**dadurch gekennzeichnet, daß**
eine Eindrückung als Absatz (14) ausgeführt ist.

**8.** Lötverbindung nach einem der Ansprüche 4 bis 7,
**dadurch gekennzeichnet, daß**
eine Eindrückung eine konstante Spaltweite t des Lötspaltes (6) zwischen Deckblech (3) und Bodenblech (2) bewirkt.

**9.** Lötverbindung einem der Ansprüche 4 bis 7,
**dadurch gekennzeichnet, daß**
eine Eindrückung eine zum Rand des Deckbleches (3) zunehmende Spaltweite des Lötspaltes (6) bewirkt.

**10.** Lötverbindung nach einem der vorherigen Ansprüche,
**dadurch gekennzeichnet, daß**
der Rand des Deckbleches (3) der Rand eines Ausschnittes (5) im Deckblech (3) ist.

**11.** Lötverbindung nach einem der Ansprüche 1 bis 9,
**dadurch gekennzeichnet, daß**
der Rand (13, 16) des Deckbleches (3) die äußere Berandung des Deckbleches (3) ist.

**12.** Lötverbindung nach einem der Ansprüche 10 oder 11,
**dadurch gekennzeichnet, daß**
das Bodenblech im Bereich des Randes des Deckbleches ebenfalls einen Rand aufweist.

**13.** Lötverbindung nach einem der vorherigen Ansprüche,
**dadurch gekennzeichnet, daß**
der Lötspalt (6) am Rand eine Spaltweite t aufweist, die größer ist als das dünnere Blech und die kleiner ist als das dickere Blech der beiden zu verbindenden Bleche Deckblech (3) und Bodenblech (2).

**14.** Lötverbindung nach einem der vorherigen Ansprüche,
**dadurch gekennzeichnet, daß**
der Lötspalt (6) am Rand eine Spaltweite zwischen 0,2 mm und 5 mm aufweist.

**15.** Lötverbindung nach einem der vorherigen Ansprüche,
**dadurch gekennzeichnet, daß**
der Lötspalt (6) eine Spaltbreite, gemessen vom Rand des Deckbleches (3), aufweist zwischen 0,5 mm und 5 mm.

**16.** Verwendung einer Lötverbindung nach einem der vorherigen Ansprüche bei der Verbindung von Karosserieteilen im Automobilbau.

**17.** Verwendung einer Lötverbindung nach einem Ansprüche 1 bis 15 bei der Verbindung rohrförmiger Bauteile, wobei ein Rohr mit geringerem Umfang in ein Rohr mit größerem Umfang gesteckt ist und der Lötspalt (6) am Rand des Rohres mit größerem Umfang entsteht.

**18.** Verfahren, bei der eine Lötverbindung nach einem der vorherigen Ansprüche mittels einer Laserlötung gelötet wird.
